# EUROPEAN PATENT SPECIFICATION

(11) **EP 4 476 984 B1**
(45) Date of publication and mention of the grant of the patent: **14.01.2026**
(21) Application number: 23701645.6
(22) Date of filing: 19.01.2023
(51) Int. Cl.: H04W 64/00, H04W 52/02, G01S 5/02, H04L 5/00

(54) **ASSISTED POSITIONING OF TERMINAL DEVICE**
UNTERSTÜTZTE POSITIONIERUNG DES ENDGERÄTS
POSITIONNEMENT ASSISTÉ DU DISPOSITIF TERMINAL

(30) Priority: 09.02.2022 FI 20225111
(43) Date of publication of application: 18.12.2024
(73) Proprietor: Nokia Technologies Oy, 02610 Espoo (FI)
(72) Inventor: MICHALOPOULOS, Diomidis, 81541 Munich (DE); KUCERA, Stepan, 81541 Munich (DE); SAHIN, Taylan, 81539 Munich (DE); PEREZ, Eva, 81543 Munich (DE)
(74) Representative: Script Intellectual Property LLP
(86) International application number: PCT/EP2023/051239
(87) International publication number: WO 2023/151921

(56) References cited:
- QUALCOMM INCORPORATED: "Signalling and Procedures for supporting Positioning Reference Units", vol. RAN WG2, no. Electronic Meeting; 20210816 - 20210827, 6 August 2021 (2021-08-06), XP052034782, Retrieved from the Internet <URL:https://ftp.3gpp.org/tsg_ran/WG2_RL2/TSGR2_115-e/Docs/R2-2108386.zip R2-2108386_(Positioning Reference Units).docx> [retrieved on 20210806]
- "3rd Generation Partnership Project; Technical Specification Group Radio Access Network; NG Radio Access Network (NG-RAN); Stage 2 functional specification of User Equipment (UE) positioning in NG-RAN (Release 16)", vol. RAN WG2, no. V16.7.0, 23 December 2021 (2021-12-23), pages 1 - 121, XP052083418, Retrieved from the Internet <URL:https://ftp.3gpp.org/Specs/archive/38_series/38.305/38305-g70.zip 38305-g70.docx> [retrieved on 20211223]

## Description

### Field

Various embodiments described herein relate to the field of wireless communications and, particularly, to positioning a terminal device of a cellular communication system by using positioning reference units.

### Background

Positioning of terminal devices is used in modern cellular communication systems for various purposes, such as improving system operation and provision of location-based communication services. A concept of positioning reference units (PRU) has been introduced, where a terminal device is positioned by using PRUs within a proximity of the terminal device. The locations of the PRUs may be known beforehand, e.g. be fixed, and they may help the terminal device in the positioning. The PRUs and the terminal device may transmit reference signals measured for the purpose of positioning. With the knowledge of the locations of the PRUs and the measurements, the location of the terminal device with respect to the PRUs may be estimated. Challenges with using the PRUs is the efficiency: the positioning is relatively infrequent operation, so it is not efficient to keep the PRUs constantly transmitting the reference signals. On the other hand, separate activation of the PRUs introduces latency to the positioning. Further, it would be efficient to select only PRU(s) that are truly required for positioning the terminal device, i.e. the PRU(s) within the proximity of the terminal device. There exist applications requiring accurate positioning with low latency, e.g. automotive applications (autonomously driving vehicles).
QUALCOMM INCORPORATED: "Signalling and Procedures for supporting Positioning Reference Units", 3GPP DRAFT; R2-21 08386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic Meeting; 20210816-20210827 6 August 2021 (2021-08-06) discloses a Narnf_Communication_N1N2MessageTransfer service operation towards the AMF which previously registered the PRU at the LMF for this PRU. The PRU provides the requested reference measurements (e.g., RSTD, RSRP, Rx-Tx Time Difference) in a LPP Provide Location Information to the LMF. The NG-RAN Node may provide an UL-PRS (SRS) configuration to the PRU and/or activate a UL-PRS configuration in the PRU. The PRU then transmits the UL-PRS which may be received by multiple gNBs/TRPs which perform UL positioning reference measurements (e.g., UL-AoA, RTOA, gNB RxTx Time Difference measurements). The LMF determines correction terms from the received PRU measurements using the known location of the PRU. The LMF stores the correction terms and uses them to correct location measurements for other UEs.

### Brief description

Some aspects of the invention are defined by the independent claims.

Some embodiments of the invention are defined in the dependent claims.

### List of drawings

Embodiments are described below, by way of example only, with reference to the accompanying drawings, in which
Figure 1 illustrates a wireless communication scenario to which some embodiments of the invention may be applied;
Figure 2 illustrates a positioning scenario for some embodiments;
Figures 3, 4, and 5 illustrate some features of the claimed invention for assisted positioning of a terminal device;
Figures 6 and 7 illustrate some further embodiments based on the embodiments of Figures 3, 4, and 5;
Figure 8 illustrates another embodiment for assisted positioning of the terminal device;
Figure 9 illustrates yet another embodiment for assisted positioning of the terminal device;
Figures 10 to 13 illustrate block diagrams of structures of apparatuses according to some embodiments.

### Description of embodiments

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. A person skilled in the art will realize that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

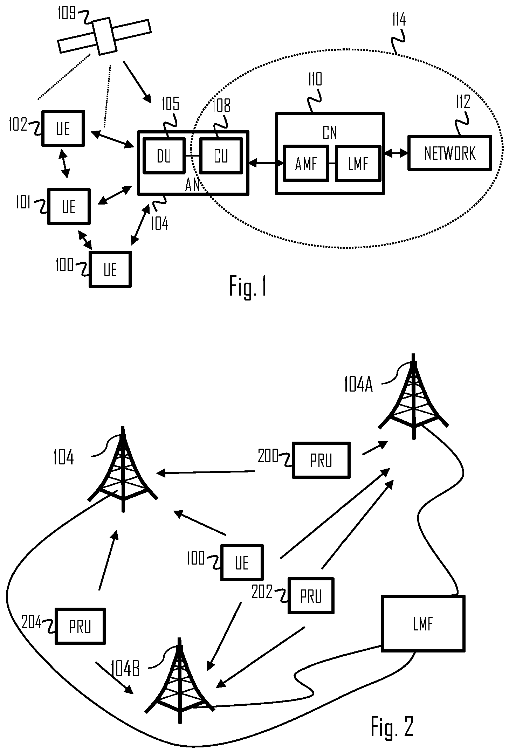

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows terminal devices or user devices 100 and 102 configured to be in a wireless connection on one or more communication channels in a cell with an access node (such as (e/g)NodeB) 104 providing the cell. (e/g)NodeB refers to an eNodeB or a gNodeB, as defined in 3GPP specifications. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used not only for signalling purposes but also for routing data from one (e/g)NodeB to another. The (e/g)NodeB is a computing device configured to control the radio resources of communication system it is coupled to. The NodeB may also be referred to as a base station, an access point, an access node, a network element in a radio access network or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. In the context of 5G New Radio, the core network employs a service-based architecture, as known in the art

With respect to positioning, the service-based architecture (core network) comprises an access and mobility management function (AMF) and a location management function (LMF). The AMF provides location information for call processing, policy, and charging to other network functions in the core network and to other entities requesting for positioning of terminal devices. The AMF receives and manages location requests from several sources: mobile-originated location requests (MO-LR) from the terminal devices and mobile-terminated location requests (MT-LR) from other functions of the core network or from other network elements. The AMF selects the LMF for each request and uses its positioning service to trigger a positioning session. The LMF then carries out the positioning upon receiving such a request from the AMF. The LMF manages the resources and timing of positioning activities. An LMF uses a Namf_ Communication service on an NL1 interface to request positioning of a terminal device from one or more access nodes, or communicates with the terminal device over N1 for UE-based or UE-assisted positioning. The positioning may include estimation of a location and, additionally, the LMF may also estimate movement or accuracy of the location information when requested. Connection-wise, the AMF is between the access node and the LMF and, thus, closer to the access nodes than the LMF.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. 5G specifications define two relay modes: out-of-band relay where same or different carriers may be defined for an access link and a backhaul link; and in-band-relay where the same carrier frequency or radio resources are used for both access and backhaul links. In-band relay may be seen as a baseline relay scenario. A relay node is called an integrated access and backhaul (IAB) node. It has also inbuilt support for multiple relay hops. IAB operation assumes a so-called split architecture having CU and a number of DUs. An IAB node contains two separate functionalities: DU (Distributed Unit) part of the IAB node facilitates the gNB (access node) functionalities in a relay cell, i.e. it serves as the access link; and a mobile termination (MT) part of the IAB node that facilitates the backhaul connection. A Donor node (DU part) communicates with the MT part of the IAB node, and it has a wired connection to the CU which again has a connection to the core network. In the multihop scenario, MT part (a child IAB node) communicates with a DU part of the parent IAB node.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave - sub-THz). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and typically fully centralized in the core network. The low-latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network or the Internet, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 105) and non-real time functions being carried out in a centralized manner (in a centralized unit, CU 108).

It should also be understood that the distribution of functions between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or node B (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway, maritime, and/or aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 109 in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

Figure 2 illustrates the assisted positioning described in Background where one or more positioning reference units (PRU) 200, 202, 204 is used for positioning the terminal device. The PRUs may be configured to transmit reference signals that are measured for the purpose of positioning the terminal device 100. The terminal device may further transmit a reference signal for the purpose of positioning the terminal device. One or more access nodes 104, 104A, 104B may measure the reference signals received from the PRU(s) 200 to 204 and from the terminal device 100. Measured parameters (measurement data) derived from the received reference signals may include a reference signal reception time, reference signal transmission delay (RSTD), reference signal angle-of-arrival, and/or reference signal reception power (RSRP), for example. The measurement data may be reported to a network element acting as a location management function (LMF) configured to carry out the positioning on the basis of the measurement data. The LMF may estimate a location of the terminal device on the basis of the received measurement data and the known locations of the PRU(s) measured by the reporting access node(s) by using a state-of-the-art positioning method. For example, location estimation functions used in real-time kinematic positioning (RTK) applications of global navigation satellite systems may be employed. As an example, if the measurements indicate that signals received from the terminal device and one of the PRU(s) have high correlation, the location of the terminal device may be estimated to be close to that PRU and further away from the other PRUs. A correction from the location of the PRU may be computed on the basis of the measurement data, e.g. by using the difference between the measurement data associated with the terminal device and the measurement data associated with the closest PRU. For example, multi-lateration measurements (multiple measurements of the RSRP, RSTD, and/or other parameters) may indicate that the terminal device is to a certain direction from the closest PRU, and the correction may be made to that direction. The embodiments described below focus on efficient triggering of the positioning and, therefore, actual estimation of the location of the terminal device is beyond the scope of this description.

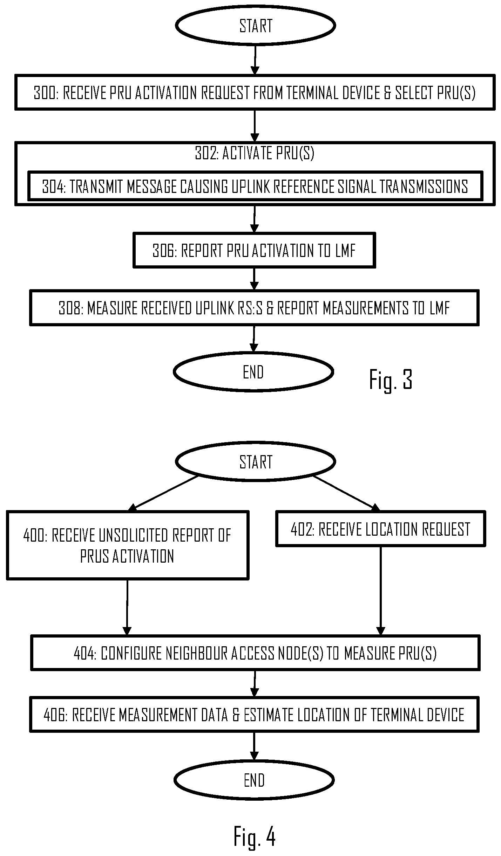

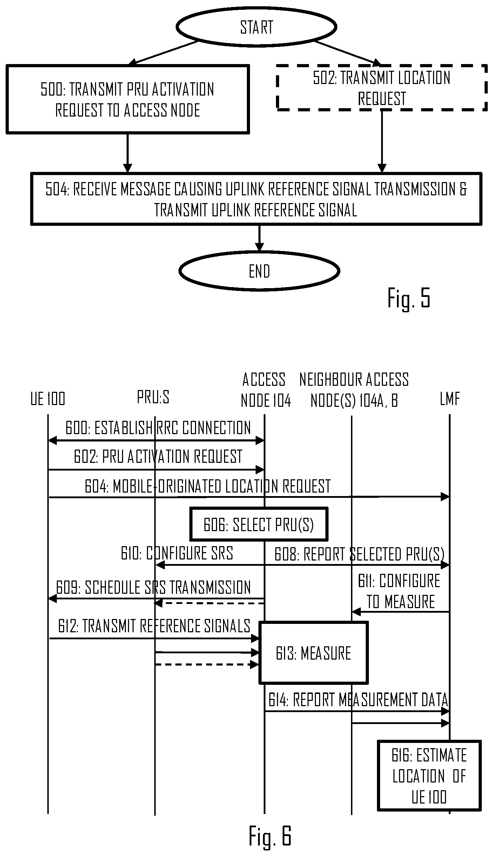

Figures 3, 4, and 5 illustrate some features of the claimed invention for assisted positioning of a terminal device. Figure 3 illustrates a method executed by an apparatus for a radio access network serving the terminal device (e.g. the access node 104), Figure 4 illustrates a method executed by an apparatus for a core network operating the LMF (e.g. the network element such as the LMF), and Figure 5 illustrates a method executed by an apparatus for the terminal device being positioned, e.g. the terminal device 100.

Referring to Figure 3, the method in the access node 104 comprises: receiving (block 300), from a terminal device, a first message requesting activation of at least one positioning reference unit in the radio access network for positioning of the terminal device; causing (block 302), based on the first message, the activation the at least one positioning reference unit and transmitting (block 304) to the at least one positioning reference unit, a second message causing one or more uplink reference signal transmissions for the positioning of the terminal device; reporting (block 306) to a network element in a core network associated with the radio access network, information indicative of the activation of the at least one positioning reference unit, the network element comprising a location management function used for the positioning of the terminal device; conducting (block 308) measurements on the one or more uplink reference signal transmissions from the terminal device and the at least one positioning reference unit; and reporting the measurements to the network element.

Referring to Figure 4, the method in the network element comprises: receiving (block 400), from a network element in the radio access network, an unsolicited report indicating activation of at least one positioning reference unit by the access node for positioning of the terminal device; receiving (block 402) a location request triggering the positioning; in response to the report and the location request, configuring (block 404) at least one further network element of the radio access network to conduct measurements on the at least one positioning reference unit and the terminal device during the positioning and receiving (block 406) reported measurements from the network element and the at least one further network element of the radio access network; estimating (block 406) a location of the terminal device on the basis of the measurement data. Referring to Figure 5, the method in the terminal device comprises: transmitting (block 500), to a network element of a radio access network, a first message requesting activation of at least one positioning reference unit for positioning the terminal device; receiving (block 504), from the network element of the radio access network, a second message causing an uplink reference signal transmission for the positioning the terminal device; and performing the uplink reference signal transmission based on the second message.

In an embodiment of Figures 3 and 5, the terminal device further transmits and the network element for the radio access network a location request (block 502) that is a logically different message than the PRU activation message of block 500. Further embodiments are described below.

In the embodiments described below, the access node is used as an embodiment of the network element of the radio access network while the LMF is described as an embodiment of the network element of the core network.

In the above-described embodiments, there is introduced the PRU activation request (the first message) delivered directly to the access node by the terminal device, and subsequent reporting of the activated PRUs by the access node to the LMF as unsolicited from the perspective of the LMF. This provides a lower latency to solutions where the LMF queries the selected PRUs from the access node only after receiving the location request. In some embodiments described below, the PRU activation request is delivered to the access node by a network element other than the LMF such that the delivery is unsolicited from the perspective of the LMF.

A general procedure of the assisted positioning may comprise the following steps: the access node 104 selecting the PRU(s) to assist in the positioning the terminal device; the LMF configuring the neighbouring access nodes to assist in the positioning by measuring the uplink reference signals (e.g. positioning reference signals, PRSs, or sounding reference signals, SRSs) transmitted by the selected PRU(s) and the terminal device; and performing the measurements by the access nodes and the estimation of the location of the terminal device by the LMF. Instead of considering the procedure as a single concatenated sequence of events triggered by the location request (e.g. a mobile-originated location request (MO-LR) or a mobile-terminated location request (MT-LR), splitting the procedure into two parallel procedures enables reduction of the latency in the positioning. The two parallel procedures can be understood to be the PRU activation by the access node (triggered by the PRU activation request) and the positioning triggered by the location request. The more these procedures are performed simultaneously and in parallel processes, the more latency gains can be achieved. Therefore, it would be beneficial to deliver the PRU activation request to the access node as soon as possible, e.g. without the involvement of the LMF, so that the PRU selection and activation would be on-going or even completed at the time the LMF receives the location request.

In an embodiment, the PRU activation by the access node comprises configuring an uplink reference signal configuration to the selected at least one PRU and the terminal device, and the PRU(s) and the terminal device transmit, for the purpose of the positioning, the uplink reference signal (PRS) that complies with the uplink reference signal configuration. The access node may configure the same uplink PRS configuration to the PRUs, in case multiple PRUs have been selected, or it may configure different uplink PRS configurations to the PRUs. The different uplink PRS configurations may include different PRS sequences, different PRS uplink time-frequency resources, or otherwise different transmission parameters for the PRS transmission. The access node may then report the uplink reference signal configuration(s) of the PRUs and an uplink PRS configuration of the terminal device to the network element. Upon receiving the uplink reference signal configuration(s), the network element (LMF) may deliver the uplink PRS configuration(s) to the at least one further access node 104A, 104B and configure the at least one further access node to measure the uplink PRSs complying with the uplink reference signal configuration(s) in the positioning. As a consequence, the neighbouring access nodes 104A, 104B are capable of determining, for example, the time-frequency resources to monitor for the uplink PRSs from the selected PRU(s) and the terminal device and measure the uplink PRSs. The PRU activation process may further comprise activating the selected PRU(s) and the terminal device to transmit the uplink PRSs. This may be carried out at the same time as configuring the uplink reference signal configurations, e.g. the uplink reference signal configurations may schedule the uplink resources for transmitting the uplink PRSs. In another embodiment, the activation of the uplink PRS transmission is triggered by a separate activation message. In such a case, the uplink PRS configurations may be configured on a higher protocol layer, e.g. a radio resource control (RRC) layer, while the activation of the uplink PRS transmission is performed on a lower protocol layer, e.g. a medium access control (MAC) layer or a physical (PHY) layer.

In an embodiment, the uplink PRS configurations are static and preconfigured before the procedures of Figures 3 to 5. As a consequence, the separate configuration of the uplink PRS configurations in connection with every PRU activation process is not necessary and can be omitted. The static parameters may include at least the uplink PRS sequence and the time-frequency resources. In such a case, the activation may comprise or consist of triggering (scheduling) the PRU(s) and the terminal device to transmit the uplink PRS.

As described above, the SRS and the respective SRS configuration specified in the 5G New Radio specifications is an embodiment of the PRS and the respective PRS configuration.

In an embodiment, the access node selects and reports all PRUs under the control of the access node to the LMF in block 304. In another embodiment, the access node selects and reports a subset of PRUs under the control of the access node. The access node may down-select the PRUs, for example, on the basis of channel conditions with the PRUs, and/or a current status of the PRUs. For example, the access node may select at least PRU(s) that is/are currently active and transmitting the uplink PRSs, e.g. periodically. The access node may omit selection of at least one PRU that has poor channel conditions with the access node. The channel conditions may be measured intermittently by the access node. Other criteria for down-selecting the PRUs may be employed.

In an embodiment, the report of block 304 comprises identifiers of the activated PRU(s). In case the selection has been made earlier and identifiers of the selected PRU(s) has already been communicated with the LMF, the report needs not to comprise the identifiers but only indication that the PRU(s) are or have been activated.

In an embodiment, the terminal device transmits the PRU activation request and the location request as separate messages. The PRU activation request may be transmitted as an access-stratum message, e.g. on a RRC protocol layer or a MAC layer, whereas the location request may be transmitted as a non-access stratum message. Accordingly, the PRU activation request and the location request may be transmitted on different protocol layers. Figure 6 illustrates such an embodiment.

Referring to Figure 6, the terminal device 100 (UE) and the access node may have established an RRC connection (step 600) according to the state of the art. The RRC connection may be in a connected mode (RRC_CONNECTED) or in an inactive mode (RRC_INACTIVE) for the duration of the following procedure. Upon the terminal device 100 detecting a need to determine its location, the terminal device may trigger the transmission of both the PRU activation request (step 602) and the location request (step 604). The location request may comply with a mobile-originated location request (MO-LR) specified in the specifications for the 5G New Radio. In another embodiment, the location request comprises an information element indicating to the LMF that a PRU activation process is ongoing at the access node. Thanks to transmitting the PRU activation request substantially simultaneously with the location request, their respective processing at the access node 104 and at the network element (LMF) can occur simultaneously, thus reducing the latency and advancing the actual positioning occasion. The PRU activation request may be transmitted in the connected mode in a control element of a MAC or RRC message addressed to the access node. In the inactive mode or even in an idle mode (RRC_IDLE), another signalling message may be used, for example a small data transmission (SDT) feature.

In response to the PRU activation request, the access node selects the PRU(s) to be activated for the positioning (block 606), e.g. all PRUs under the control of the access node or a subset thereof. Furthermore, the access node may select the uplink PRS configuration(s) for each selected PRU, and signal the uplink PRS configuration(s) to the respective PRUs (step 610), e.g. in a control element of an RRC message or a MAC message. Upon selecting the PRU(s) and respective uplink PRS configuration(s), the access node may report the selected PRU(s) and respective uplink PRS configuration(s) to the LMF in step 608. Meanwhile, the LMF may have already received the location request in step 604 and is prepared to receive the report from the access node. In an embodiment, the report comprises the uplink PRS configuration of the terminal device as well. A separate configuration of the uplink PRS configuration may not be necessary for the terminal device at this stage, if the terminal device readily has an uplink PRS configuration, which may be a part of step 600. The access node 104 may transmit the information on the selected PRUs and the respective PRS configurations via the AMF or directly to the LMF, using an NG application protocol (NGAP) or a new radio positioning protocol A (NRPPa) message, respectively. An example of the NRPPa message is NRPPa Positioning Information Update that is a message enabling unsolicited transmission of information from the access node to the LMF. With respect to the definition of 'unsolicited' in this description, the term means that the access node provides the information without receiving a request to provide the information from the LMF, which becomes obvious from the description herein.

As described above, upon receiving the information on the activated PRU(s) and the uplink PRS configurations of the activated PRU(s) and the terminal device in step 608, the LMF may configure the access node(s) neighbouring to the access node 104 to measure the uplink PRSs of the activated PRUs and the terminal device (step 611). The LMF may employ the NRPPa protocol, e.g. a NRPPa measurement request message that includes, as an information element, one or more fields for indicating the activated PRUs and optionally the terminal device. Accordingly, the neighbouring access node(s) 104A, B may tune their receiver to receive the uplink PRSs from the terminal device and the activated PRU(s) in step 612 and to measure the uplink PRSs in block 613, e.g. one or more of the above-described parameters. For the purpose of the measurements, the access node 104 may schedule and/or activate the PRS transmission in step 609 to the terminal device and, optionally, to the selected PRU(s), thus activating the PRU(s) to transmit. In an alternative embodiment, step 610 readily triggers the PRU(s) to periodically transmit the uplink PRSs, thus reducing the signalling. The dashed line in step 612 represents that all the PRU(s) under the control of the access node 104 may not necessarily be activated.

Upon performing the measurements, the access node and the neighbouring access node(s) each generate measurement data in block 613 that is reported to the LMF in step 614. Thereafter, the LMF may process the measurement data and estimate the location of the terminal device 100 in block 616. Upon receiving the measurement data from the access nodes, the measurement data indicating measurement of multiple PRUs, the LMF may down-select to maintain suitable PRU(s) to gather correction data for positioning the terminal device, and applies this correction to positioning estimate calculations. The LMF may run a local implementation method to find the proper PRU(s), i.e. to select only PRU(s) that contribute to correctly refining the measurement data measured on the uplink PRS received from the terminal device. Referring to Figure 2 where the terminal device is closer to the PRU 202 than to the PRUs 200, 204. Assuming that the access node 104 has activated all PRUs 200 to 204 and respective measurement data is reported to the LMF, the LMF may omit measurement data related to the PRUs 200, 204 and use the measurement data measured from uplink PRS signals received from the terminal device 100 and the PRU 202, and use the measurement data measured on the PRU 202 to improve accuracy of positioning the terminal device 100. These implementation steps are out of scope of this disclosure. The remaining steps may follow legacy schemes for estimating the location of the terminal device and further refining the location based on the correction data obtained via PRU measurements focused on the selected PRU(s).

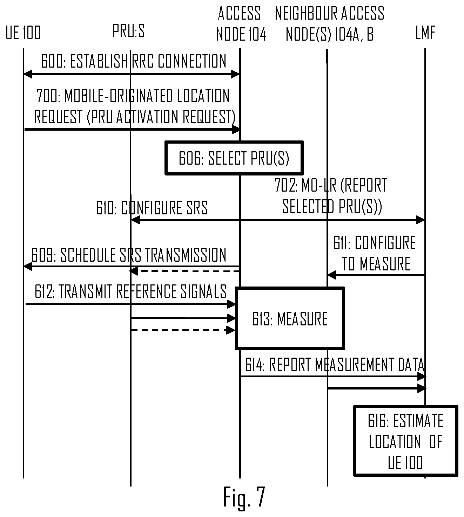

In an embodiment, the first message is the location request, e.g. the MO-LR message comprising an information element for indicating that the location request comprises the PRU activation request. Figure 7 illustrates such an embodiment. In Figure 7, the same reference numbers as in Figure 6 represent the same or substantially similar functions. Referring to Figure 7, the terminal device transmits the location request in step 700, and the location request may comprise the information element indicating that the location request comprises the PRU activation request. The location request may be transmitted on a protocol layer that allows the access node to extract at least the information element from the location request for the purpose of expedited selection of the PRUs. For example, the location request may be a legacy MO-LR LTE positioning protocol (LPP) message having a new session identifier that will allow incorporation of the information element and enable detection by the access node for the purpose of PRU selection. Alternatively, a new type of MO-LR message may be used that is received and extracted at least partially by the access node 104. Upon completing block 606, the access node may repopulate the location request with new information elements, reporting the selected at least one PRU to the LMF and, optionally, the uplink PRS configurations described above. Accordingly, at least some information elements present in the received location request may not be present in the location request transmitted by the access node in step 702, e.g. the PRU activation request may be replaced by the information element(s) indicating the selected PRU(s) and optionally the uplink PRS configurations. In this embodiment, the LMF thus receives the location request and the report about the selected PRU(s) in the same message in step 702.

In an alternative embodiment, upon receiving the location request and extracting the PRU activation request from it, the access node may deliver the location request, with or without the information element indicating the PRU activation request, to the LMF and, meanwhile, carry out block 606. Upon completing block 606, the process may proceed as the embodiment of Figure 6, i.e. the selected PRU(s) may be reported in step 608 in a message that is separate from the location request and transmitted after forwarding the location request to the LMF. From the perspective of the LMF, the location request is received from the terminal device as delivered via the access node at a different time instant than the report.

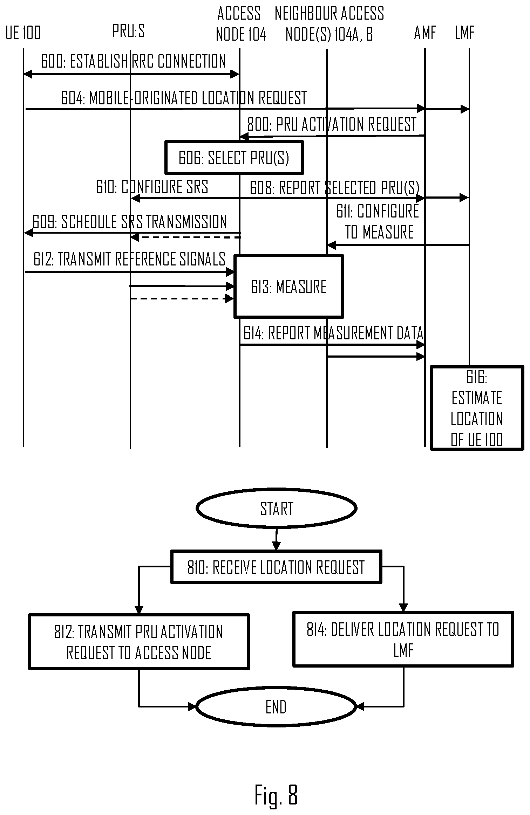

Figure 8 illustrates an embodiment where the latency improvement is gained by configuring the AMF to transmit, in response to a received location request, the PRU activation request to the access node. The location request may be either the MO-LR received from the direction of the terminal device 100 or MT-LR received from the opposite direction, e.g. from a location service client different from the terminal device 100 but requesting positioning of the terminal device 100. Figure 8 illustrates the MO-LR case but the same principle may be applied to the MT-LR case. The procedure of Figure 8 follows the procedure of Figure 6 unless otherwise provided in the description below.

Referring to Figure 8, the AMF receives the location request in step 604, and delivers the location request to the LMF. However, upon detecting the location request, the AMF generates a PRU activation request that is substantially similar to the above-described PRU activation request in the sense that it triggers block 606 and following actions in the access node 104. The AMF transmits the PRU activation request to the access node in step 800, e.g. in an NGAP message. Thereafter, the procedure may proceed according to the embodiment of Figure 6. The operation of the AMF in this embodiment may be described by the following method-like steps: receiving (block 810) the location request triggering positioning of the terminal device; in response to the location request, transmitting (block 812) to an access node serving the terminal device an activation request requesting activation of at least one positioning reference unit for positioning the terminal device; and delivering (block 814) the location request to a location management function.

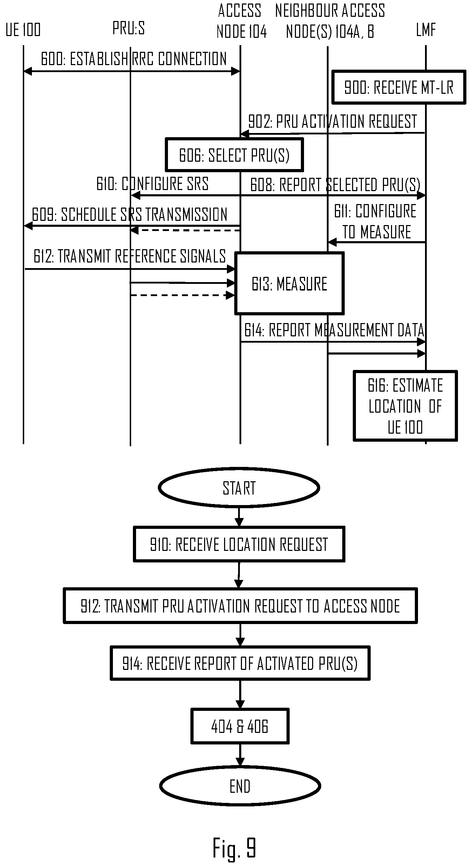

Figure 9 illustrates an embodiment where the latency improvement is gained by the LMF delegating the responsibility of PRU selection and activation to the access node instead of doing itself. Bringing the selection and activation closer to the PRUs provides the latency improvement and signalling overhead can be reduced. The procedure of Figure 9 follows the procedure of Figure 6 unless otherwise provided in the description below. In the embodiment of Figure 9, the location request is the MT-LR but the same principles may be applied to the MO-LR, although the embodiments of Figures 6 to 8 may provide improved solutions in terms of latency for the MO-LR scenario.

Referring to Figure 9, the LMF receives the location request (MT-LR) in step 900, e.g. from the location service client other than the terminal device, requesting positioning of the terminal device 100. In response to receiving the location request, the LMF generates the PRU activation request that is substantially similar to the above-described PRU activation request in the sense that it triggers block 606 and following actions in the access node 104. The LMF transmits the PRU activation request to the access node in step 902, e.g. in an NGAP message. Thereafter, the procedure may proceed according to the embodiment of Figure 6. The operation of the AMF in this embodiment may be described by the following method-like steps: receiving (block 910) a location request triggering positioning of the terminal device; in response to the location request, transmitting (block 912) to a network element of the radio access network serving the terminal device, a request for activating at least one positioning reference unit under the control of the network element of the radio access network; receiving (block 914), in response to the request, a report indicative of the activation of the at least one positioning reference unit; configuring at least one further network element of the radio access network to conduct measurements on the at least one positioning reference unit and the terminal device for the positioning and receiving reported measurements from the at least one positioning reference unit and the terminal device; and estimating a location of the terminal device on the basis of the reported measurements.

In an embodiment, the access node and the LMF are pre-configured with information on the PRU(s) that shall be activated upon instantiating the PRU activation request and the location request. Similarly, the uplink PRS configurations may be pre-configured to the PUR(s) that shall be activated. When the location request is received by the LMF, the LMF knows which PRUs shall be activated and what uplink PRS configurations they shall use, so that it may carry out block 404 or step 611 without receiving any report containing PRU identifiers from the access node. However, the report may still be sent to indicate the activation of the pre-configured PRUs. However, the PRU activation request may still be transmitted to the access node according to any one of the above-described embodiments in order to activate the PRU(s).

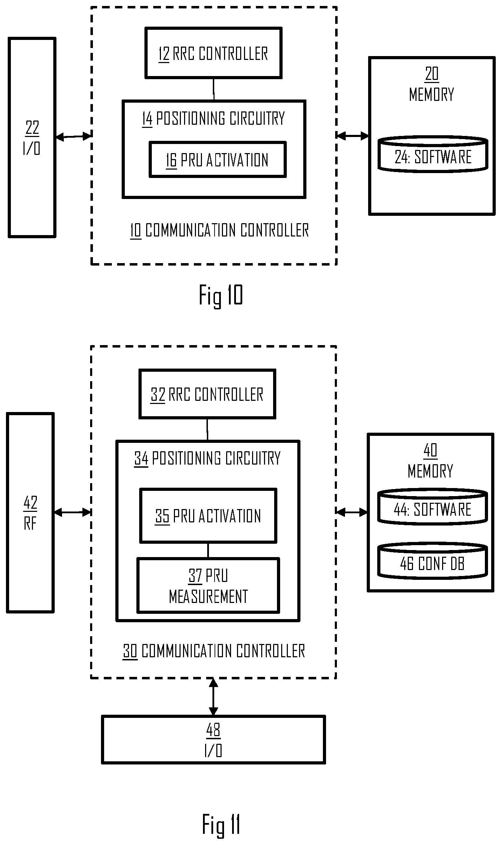

Figure 10 illustrates an apparatus comprising means for carrying out the process of Figure 5 or any one of the embodiments described above. The apparatus may comprise a processing circuitry, such as at least one processor, and at least one memory 20 including computer program code or computer program instructions (software) 24, wherein the at least one memory and the computer program code (software) are configured, with the at least one processor, to cause the apparatus to carry out the process of Figure 5 or any one of its embodiments described above. The apparatus may be for the terminal device 100. The apparatus may be a circuitry or an electronic device realizing some embodiments of the invention in the terminal device 100. The apparatus carrying out the above-described functionalities may thus be comprised in such a device, e.g. the apparatus may comprise a circuitry such as a chip, a chipset, a processor, a micro controller, or a combination of such circuitries for the terminal device 100. The at least one processor or a processing circuitry may realize a communication controller 10 controlling communications in a radio interface of the cellular communication system in the above-described manner. The communication controller may comprise an RRC controller configured to establish and manage RRC connections, transfer of data over the RRC connections with the access node 104.

The communication controller 10 may comprise a positioning circuitry 14 configured to carry out the positioning of the apparatus by utilizing the assisted positioning according to the procedure of Figure 5 or any one of the embodiments thereof. Upon detecting a need for positioning the terminal device, the positioning circuitry may initiate transmission of the location request MO-LR. The positioning circuitry may comprise a PRU activation circuitry 16 that is triggered by the initiation. Depending on the embodiment, the PRU activation circuitry 16 may generate a separate PRU activation message or generate an information element to the location request to realize the PRU activation request.

The apparatus may further comprise an application processor (not shown) executing one or more computer program applications that generate a need to transmit and/or receive data through the communication controller 10 and, in some embodiment, generate a request triggering the positioning of the terminal device. The application processor may form an application layer of the apparatus. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application. Positioning of the apparatus may be beneficial for all these applications. The application processor may thus generate a command for executing the process of Figure 5.

The memory 20 may be implemented using any suitable data storage technology, such as semiconductor-based memory devices, flash memory, magnetic memory devices and systems, optical memory devices and systems, fixed memory and removable memory. The memory may further store a configuration database storing, for example, the current uplink PRS configuration of the terminal device for use in the positioning.

The apparatus may further comprise a communication interface 22 comprising hardware and/or software for providing the apparatus with radio communication capability, as described above. The communication interface 22 may include, for example, an antenna, one or more radio frequency filters, a power amplifier, and one or more frequency converters. The communication interface 22 may comprise hardware and software needed for realizing the radio communications over the radio interface, e.g. according to specifications of an LTE or 5G radio interface.

Figure 11 illustrates an apparatus comprising a processing circuitry, such as at least one processor, and at least one memory 40 including a computer program code or computer program instructions (software) 44, wherein the at least one memory and the computer program code or computer program instructions are configured, with the at least one processor, to cause the apparatus to carry out functions of the access node in the process of Figure 3 or any one of its embodiments described above. The apparatus may be for the access node. The apparatus may be a circuitry or an electronic device realizing some of the above-described embodiments in the access node. The apparatus carrying out the above-described functionalities may thus be comprised in such a device, e.g. the apparatus may comprise a circuitry such as a chip, a chipset, a processor, a micro controller, or a combination of such circuitries for the access node. In other embodiments, the apparatus is the access node. The at least one processor or a processing circuitry may realize a communication controller 30 controlling communications of the access node 104 in the above-described manner. The communication controller may comprise an RRC controller 32 configured to establish and manage RRC connections and transfer of data over the RRC connections with terminal devices it serves.

The communication controller 30 may further comprise a positioning circuitry 34 configured to assist in positioning of the terminal device 100 according to any one of the above-described embodiments. The positioning circuitry 34 may comprise a PRU activation circuitry 34 configured to, in response to a received PRU activation request, to activate at least some of the PRUs under the control of the access node (block 300 and 304). The PRU activation circuitry may also report the activation to the LMF in the above-described manner (block 304 or step 608). The positioning circuitry may further comprise a PRU measurement circuitry 37 configured to measure (block 306 or 613) the uplink PRS signals received from the activated PRUs (and the terminal device) and report the resulting measurement data to the LMF, as described above.

The memory 40 may be implemented using any suitable data storage technology, such as semiconductor-based memory devices, flash memory, magnetic memory devices and systems, optical memory devices and systems, fixed memory and removable memory. The memory 40 may comprise a configuration database 46 for storing configuration parameters, e.g. the pre-configured list of PRU(s) to be activated and/or respective uplink PRS configurations for the PRU(s) and the terminal device.

The apparatus may further comprise a radio frequency (RF) communication interface 42 comprising hardware and/or software for providing the apparatus with radio communication capability with the terminal devices, as described above. The communication interface 42 may include, for example, an antenna array, one or more radio frequency filters, a power amplifier, and one or more frequency converters. The communication interface 42 may comprise hardware and software needed for realizing the radio communications over the radio interface, e.g. according to specifications of an LTE or 5G radio interface.

The apparatus may further comprise a second communication interface 48 configured to realize the connectivity with the AMF and LMF or, generally, towards the core network, e.g. an NG-C interface. The communication interface 48 may comprise necessary hardware and software to realize the connectivity.

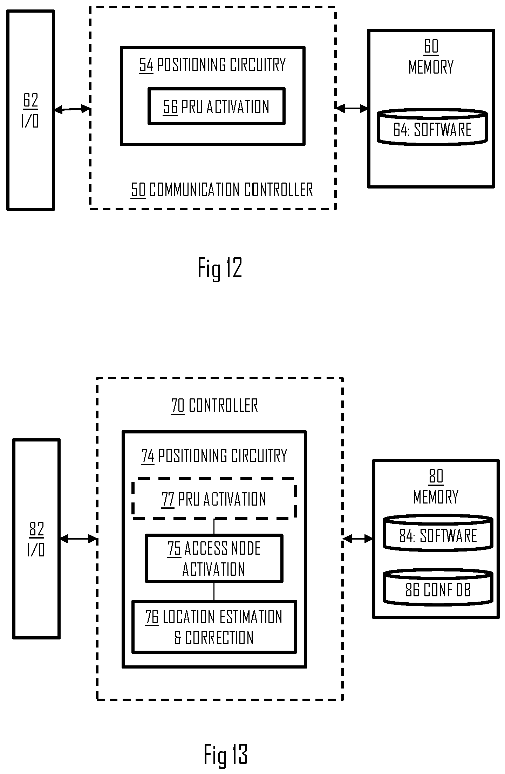

Figure 12 illustrates an apparatus comprising a processing circuitry, such as at least one processor, and at least one memory 60 including a computer program code or computer program instructions (software) 64, wherein the at least one memory and the computer program code or computer program instructions are configured, with the at least one processor, to cause the apparatus to carry out functions of the AMF in the flow diagram of Figure 8 or any one of its embodiments described above. The apparatus may be for a network element or network node operating as the AMF. The apparatus may be a circuitry or an electronic device realizing some of the above-described embodiments in the network element. The apparatus carrying out the above-described functionalities may thus be comprised in such a device, e.g. the apparatus may comprise a circuitry such as a chip, a chipset, a processor, a micro controller, or a combination of such circuitries for the network element. In other embodiments, the apparatus is the network element. The at least one processor or a processing circuitry may realize a communication controller 50 controlling communications of the AMF in the above-described manner.

The communication controller 50 may comprise a positioning circuitry 54 configured to assist in positioning of the terminal device 100 according to any one of the above-described embodiments. The positioning circuitry 54 may comprise a PRU activation circuitry 56 configured to, in response to a received location request, to generate the PRU activation request and transmit the PRU activation request to the access node, as described in the embodiment of Figure 8. The positioning circuitry may then forward the location request to the LMF.

The memory 60 may be implemented using any suitable data storage technology, such as semiconductor-based memory devices, flash memory, magnetic memory devices and systems, optical memory devices and systems, fixed memory and removable memory. The apparatus may further comprise a communication interface 62 configured to realize the connectivity with the access node and LMF, e.g. an NG-C interface towards the access node and an NLs interface towards the LMF. The communication interface 62 may comprise necessary hardware and software to realize the connectivity.

Figure 13 illustrates an apparatus comprising a processing circuitry, such as at least one processor, and at least one memory 80 including a computer program code or computer program instructions (software) 84, wherein the at least one memory and the computer program code or computer program instructions are configured, with the at least one processor, to cause the apparatus to carry out functions of the network element or network node for the LMF in the flow diagram of Figure 4, 9 or any one of embodiments thereof described above. The apparatus may be for a network element or network node operating as the LMF. The apparatus may be a circuitry or an electronic device realizing some of the above-described embodiments in the network element. The apparatus carrying out the above-described functionalities may thus be comprised in such a device, e.g. the apparatus may comprise a circuitry such as a chip, a chipset, a processor, a micro controller, or a combination of such circuitries for the network element. In other embodiments, the apparatus is the network element. The at least one processor or a processing circuitry may realize a controller 70 controlling communications of the LMF in the above-described manner.

The controller 70 may comprise a positioning circuitry 74 configured to assist in positioning of the terminal device 100 according to any one of the above-described embodiments. The positioning circuitry 74 may comprise a PRU activation circuitry 77 configured to, in response to a received location request such as the MT-LR, to generate the PRU activation request and transmit the PRU activation request to the access node, as described in the embodiment of Figure 9. In some embodiments such as that of Figure 4, the PRU activation circuitry may be omitted because the PRU activation is not a task of the LMF.

The positioning circuitry may comprise an access node activation circuitry 75 configured to select which access nodes shall assist in positioning of the terminal device. Upon receiving the information on the activated PRU(s), the access node activation circuitry may select one or more neighbouring access nodes 104A, B that shall join the positioning by measuring the activated PRU(s), as described above. The access node activation circuitry may thus carry out block 404 or step 611. The positioning circuitry may further comprise a location estimation and correction circuitry 76 configured to process the measurement data received from the measuring access nodes and to estimate the location of the terminal device on the basis of the measurement data. As described above, the estimation may include using the measured PRUs to improve the accuracy of positioning.

The memory 80 may be implemented using any suitable data storage technology, such as semiconductor-based memory devices, flash memory, magnetic memory devices and systems, optical memory devices and systems, fixed memory and removable memory. The memory may further store a configuration database 86 storing, for example, a pre-configured list of PRU(s) that shall be activated upon triggering the positioning and respective PRS configurations. The apparatus may further comprise a communication interface 82 configured to realize the connectivity with the access node and AMF, e.g. an NG-C interface towards the access node and an NLs interface towards the AMF. The communication interface 88 may comprise necessary hardware and software to realize the connectivity.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figure 3 to 9, or any of the embodiments thereof may also be carried out in the form of one or more computer processes defined by one or more computer programs. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units. References to computer-readable program code, computer program, computer instructions, computer code etc. should be understood to express software for a programmable processor such as programmable content stored in a hardware device as instructions for a processor, or as configured or configurable settings for a fixed function device, gate array, or a programmable logic device.

Embodiments described herein are applicable to wireless networks defined above but also to other wireless networks. The protocols used, the specifications of the wireless networks and their network elements develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. Embodiments are not limited to the examples described above but may vary within the scope of the claims.

## Claims

1. An apparatus (104) for a radio access network, comprising means for performing:
receiving (300), from a terminal device (100), a first message requesting activation of at least one positioning reference unit in the radio access network for positioning of the terminal device;
causing (302), based on the first message, the activation of the at least one positioning reference unit and transmitting to the at least one positioning reference unit, a second message causing one or more uplink reference signal transmissions for the positioning of the terminal device;
reporting (306) to a network element in a core network associated with the radio access network, information indicative of the activation of the at least one positioning reference unit, the network element comprising a location management function used for the positioning of the terminal device;
conducting (308) measurements on the one or more uplink reference signal transmissions from the terminal device and the at least one positioning reference unit; and
reporting the measurements to the network element.

2. The apparatus of claim 1, wherein the means are further configured to perform the following in response to the first message:
transmitting (500) an uplink reference signal configuration to the at least one positioning reference unit and (504) the terminal device; and
reporting the uplink reference signal configuration to the network element.

3. The apparatus of claim 1 or 2, wherein the means are configured to report the activation of the at least one positioning reference unit to the network element in the core network via a location request.

4. The apparatus of claim 3, wherein the means are configured to communicate the location request to the network element via a protocol layer different from that for the first message.

5. The apparatus of any preceding claim, wherein the means are configured to pre-configure, before the reception of the first message, the at least one positioning reference unit to be activated.

6. The apparatus of any preceding claim, wherein the means are configured to report activation of at least one positioning reference unit that was readily activated upon receiving the first message.

7. An apparatus for a core network (110) operating a location management function for positioning of a terminal device (100), comprising means for performing:
receiving (400), from a network element in a radio access network associated with the core network, an unsolicited report indicating activation of at least one positioning reference unit by the network element for the positioning of the terminal device;
receiving a location request triggering the positioning;
in response to the report and the location request, configuring (404) at least one further network element of the radio access network to conduct measurements on the at least one positioning reference unit and the terminal device during the positioning and receiving reported measurements from the network element and the at least one further network element of the radio access network;
estimating (406) a location of the terminal device on the basis of the measurement data.

8. The apparatus of claim 7, wherein the means are configured to receive, from the network element, an uplink reference signal configuration configured to the at least one positioning reference unit and the terminal device, and to configure the at least one further network element to measure at least one uplink reference signal based on the uplink reference signal configuration in the positioning.

9. The apparatus of claim 7 or 8, wherein the report is comprised in the location request.

10. The apparatus of claim 7 or 8, wherein the means are configured to receive the location request from the terminal device as delivered via the network element at a different time instant than the report.

11. An apparatus for a terminal device (100), comprising means for performing:
transmitting, to a network element of a radio access network, a first message requesting activation of at least one positioning reference unit for positioning of the terminal device;
receiving, from the network element, a second message causing an uplink reference signal transmission for the positioning of the terminal device; and
performing the uplink reference signal transmission based on the second message.

12. The apparatus of claim 11, wherein the means are configured to transmit a location request triggering the positioning, and wherein the first message is comprised in the location request.

13. The apparatus of claim 11, wherein the means are configured to transmit the first message as an access-stratum message and to transmit a location request triggering the positioning as a non-access stratum message, wherein transmission of both the first message and the location request is triggered upon initiating the positioning of the terminal device.

14. An apparatus for a core network (110) operating a location management function for positioning of a terminal device (100), comprising means for performing:
receiving (402) a location request triggering the positioning of the terminal device;
in response to the location request, transmitting to a network element of a radio access network associated with the core network, a request for activating at least one positioning reference unit under the control of the network element of the radio access network;
receiving, in response to the request, a report indicative of activation of the at least one positioning reference unit;
configuring (404) at least one further network element of the radio access network to conduct measurements on the at least one positioning reference unit and the terminal device for the positioning and receiving reported measurements from the at least one positioning reference unit and the terminal device; and
estimating (406) a location of the terminal device on the basis of the reported measurements.

15. A method comprising:
transmitting (500), by a terminal device (100) to a network element of a radio access network, a first message requesting activation of at least one positioning reference unit for positioning of the terminal device;
receiving (504), by the terminal device from the network element, a second message causing an uplink reference signal transmission for the positioning of the terminal device; and
performing, by the terminal device, the uplink reference signal transmission based on the second message.

## Patentansprüche

1. Einrichtung (104) für ein Funkzugangsnetzwerk, die Mittel zum Durchführen von Folgendem umfasst:
Empfangen (300) einer ersten Nachricht, die eine Aktivierung von mindestens einer Positionsbestimmungsreferenzeinheit im Funkzugangsnetzwerk zur Positionsbestimmung einer Endgerätevorrichtung anfordert, von der Endgerätevorrichtung (100);
Veranlassen (302) der Aktivierung der mindestens einen Positionsbestimmungsreferenzeinheit und Übertragen zu der mindestens einen Positionsbestimmungsreferenzeinheit einer zweiten Nachricht, die eine oder mehrere Uplinkreferenzsignalübertragungen zur Positionsbestimmung der Endgerätevorrichtung veranlasst, auf Basis der ersten Nachricht;
Melden (306) von Informationen, die die Aktivierung der mindestens einen Positionsbestimmungsreferenzeinheit anzeigen, bei einem Netzwerkelement in einem Kernnetzwerk, das mit dem Funkzugangsnetzwerk verknüpft ist, wobei das Netzwerkelement eine Standortverwaltungsfunktion umfasst, die zur Positionsbestimmung der Endgerätevorrichtung verwendet wird;
Vornehmen (308) von Messungen an der einen oder den mehreren Uplinkreferenzsignalübertragungen von der Endgerätevorrichtung und der mindestens einen Positionsbestimmungsreferenzeinheit; und
Melden der Messungen beim Netzwerkelement.

2. Einrichtung nach Anspruch 1, wobei die Mittel ferner dazu ausgelegt sind, in Reaktion auf die erste Nachricht Folgendes durchzuführen:
Übertragen (500) einer Uplinkreferenzsignalauslegung zu der mindestens einen Positionsbestimmungsreferenzeinheit und (504) zur Endgerätevorrichtung; und
Melden der Uplinkreferenzsignalauslegung beim Netzwerkelement.

3. Einrichtung nach Anspruch 1 oder 2, wobei die Mittel dazu ausgelegt sind, die Aktivierung der mindestens einen Positionsbestimmungsreferenzeinheit beim Netzwerkelement im Kernnetzwerk via eine Standortanforderung zu melden.

4. Einrichtung nach Anspruch 3, wobei die Mittel dazu ausgelegt sind, die Standortanforderung via eine Protokollschicht, die sich von der für die erste Nachricht unterscheidet, zum Netzwerkelement zu kommunizieren.

5. Einrichtung nach einem der vorhergehenden Ansprüche, wobei die Mittel dazu ausgelegt sind, vor dem Empfang der ersten Nachricht die mindestens eine Positionsbestimmungsreferenzeinheit vorab zum Aktivieren auszulegen.

6. Einrichtung nach einem der vorhergehenden Ansprüche, wobei die Mittel dazu ausgelegt sind, eine Aktivierung von mindestens einer Positionsbestimmungsreferenzeinheit, die nach dem Empfangen der ersten Nachricht sogleich aktiviert wurde, zu melden.

7. Einrichtung für ein Kernnetzwerk (110), das eine Standortverwaltungsfunktion zur Positionsbestimmung einer Endgerätevorrichtung (100) betreibt, die Mittel zum Durchführen von Folgendem umfasst:
Empfangen (400) einer nicht angeforderten Meldung, die eine Aktivierung von mindestens einer Positionsbestimmungsreferenzeinheit durch ein Netzwerkelement zur Positionsbestimmung der Endgerätevorrichtung anzeigt, vom Netzwerkelement in einem Funkzugangsnetzwerk, das mit dem Kernnetzwerk verknüpft ist;
Empfangen einer Standortanforderung, die die Positionsbestimmung auslöst;
in Reaktion auf die Meldung und die Standortanforderung Auslegen (404) von mindestens einem weiteren Netzwerkelement des Funkzugangsnetzwerks, um während der Positionsbestimmung Messungen an der mindestens einen Positionsbestimmungsreferenzeinheit und an der Endgerätevorrichtung vorzunehmen, und Empfangen von gemeldeten Messungen vom Netzwerkelement und von dem mindestens einen weiteren Netzwerkelement des Funkzugangsnetzwerks;
Schätzen (406) eines Standorts der Endgerätevorrichtung auf Basis der Messdaten.

8. Einrichtung nach Anspruch 7, wobei die Mittel dazu ausgelegt sind, eine Uplinkreferenzsignalauslegung vom Netzwerkelement zu empfangen, die auf die mindestens eine Positionsbestimmungsreferenzeinheit und die Endgerätevorrichtung ausgelegt ist, und das mindestens eine weitere Netzwerkelement dazu auszulegen, auf Basis der Uplinkreferenzsignalauslegung bei der Positionsbestimmung mindestens ein Uplinkreferenzsignal zu messen.

9. Einrichtung nach Anspruch 7 oder 8, wobei die Meldung in der Standortanforderung umfasst ist.

10. Einrichtung nach Anspruch 7 oder 8, wobei die Mittel dazu ausgelegt sind, die Standortanforderung von der Endgerätevorrichtung, wie via das Netzwerkelement zugestellt, zu einer anderen Zeitinstanz als die Meldung zu empfangen.

11. Einrichtung für eine Endgerätevorrichtung (100), die Mittel zum Durchführen von Folgendem umfasst:
Übertragen einer ersten Nachricht, die eine Aktivierung von mindestens einer Positionsbestimmungsreferenzeinheit zur Positionsbestimmung der Endgerätevorrichtung anfordert, zu einem Netzwerkelement eines Funkzugangsnetzwerks;
Empfangen einer zweiten Nachricht, die für die Positionsbestimmung der Endgerätevorrichtung eine Uplinkreferenzsignalübertragung veranlasst, vom Netzwerkelement; und
Durchführen der Uplinkreferenzsignalübertragung auf Basis der zweiten Nachricht.

12. Einrichtung nach Anspruch 11, wobei die Mittel dazu ausgelegt sind, eine Standortanforderung zu übertragen, die die Positionsbestimmung auslöst, und wobei die erste Nachricht in der Standortanforderung umfasst ist.

13. Einrichtung nach Anspruch 11, wobei die Mittel dazu ausgelegt sind, die erste Nachricht als eine Zugangsschichtnachricht zu übertragen und eine Standortanforderung zu, die die Positionsbestimmung auslöst, als eine Nichtzugangsschichtnachricht zu übertragen, wobei die Übertragung sowohl der ersten Nachricht als auch der Standortanforderung nach Initiieren der Positionsbestimmung der Endgerätevorrichtung ausgelöst wird.

14. Einrichtung für ein Kernnetzwerk (110), das eine Standortverwaltungsfunktion zur Positionsbestimmung einer Endgerätevorrichtung (100) betreibt, die Mittel zum Durchführen von Folgendem umfasst:
Empfangen (402) einer Standortanforderung, die die Positionsbestimmung der Endgerätevorrichtung auslöst;
in Reaktion auf die Standortanforderung Übertragen einer Anforderung zum Aktivieren von mindestens einer Positionsbestimmungsreferenzeinheit unter der Steuerung eines Netzwerkelements eines Funkzugangsnetzwerks zum Netzwerkelement des Funkzugangsnetzwerks, das mit dem Kernnetzwerk verknüpft ist;
Empfangen einer Meldung, die eine Aktivierung der mindestens einen Positionsbestimmungsreferenzeinheit anzeigt, in Reaktion auf die Anforderung;
Auslegen (404) von mindestens einem weiteren Netzwerkelement des Funkzugangsnetzwerks zum Vornehmen von Messungen an der mindestens einen Positionsbestimmungsreferenzeinheit und der Endgerätevorrichtung zur Positionsbestimmung und Empfangen von gemeldeten Messungen von der mindestens einen Positionsbestimmungsreferenzeinheit und der Endgerätevorrichtung; und
Schätzen (406) eines Standorts der Endgerätevorrichtung auf Basis der gemeldeten Messungen.

15. Verfahren, das Folgendes umfasst:
Übertragen (500) einer ersten Nachricht, die eine Aktivierung von mindestens einer Positionsbestimmungsreferenzeinheit zur Positionsbestimmung der Endgerätevorrichtung anfordert, durch eine Endgerätevorrichtung (100) zu einem Netzwerkelement eines Funkzugangsnetzwerks;
Empfangen (504) einer zweiten Nachricht, die für die Positionsbestimmung der Endgerätevorrichtung eine Uplinkreferenzsignalübertragung veranlasst, durch die Endgerätevorrichtung vom Netzwerkelement; und
Durchführen der Uplinkreferenzsignalübertragung durch die Endgerätevorrichtung auf Basis der zweiten Nachricht.

## Revendications

1. Appareil (104) pour un réseau d'accès radio, comprenant des moyens pour réaliser ce qui suit :
recevoir (300) d'un dispositif terminal (100) un premier message demandant l'activation d'au moins une unité de référence de positionnement dans le réseau d'accès radio pour le positionnement du dispositif terminal ;
sur la base du premier message, provoquer (302) l'activation de l'au moins une unité de référence de positionnement, et transmettre à l'au moins une unité de référence de positionnement un deuxième message provoquant une ou plusieurs transmissions de signal de référence de liaison montante pour le positionnement du dispositif terminal ;
rapporter (306) à un élément de réseau dans un réseau central associé au réseau d'accès radio des informations indiquant l'activation de l'au moins une unité de référence de positionnement, l'élément de réseau comprenant une fonction de gestion d'emplacement utilisée pour le positionnement du dispositif terminal ;
effectuer (308) des mesures sur les une ou plusieurs transmissions de signal de référence de liaison montante à partir du dispositif terminal et de l'au moins une unité de référence de positionnement ; et
rapporter les mesures à l'élément de réseau.

2. Appareil selon la revendication 1, dans lequel les moyens sont en outre configurés pour réaliser ce qui suit en réponse au premier message :
transmettre (500) une configuration de signal de référence de liaison montante à l'au moins une unité de référence de positionnement et (504) au dispositif terminal ; et
rapporter la configuration de signal de référence de liaison montante à l'élément de réseau.

3. Appareil selon la revendication 1 ou 2, dans lequel les moyens sont configurés pour rapporter l'activation de l'au moins une unité de référence de positionnement à l'élément de réseau dans le réseau central via une demande d'emplacement.

4. Appareil selon la revendication 3, dans lequel les moyens sont configurés pour communiquer la demande d'emplacement à l'élément de réseau via une couche de protocole différente de celle du premier message.

5. Appareil selon l'une des revendications précédentes, dans lequel les moyens sont configurés pour préconfigurer, avant la réception du premier message, l'au moins une unité de référence de positionnement à activer.

6. Appareil selon l'une des revendications précédentes, dans lequel les moyens sont configurés pour rapporter l'activation d'au moins une unité de référence de positionnement qui a été facilement activée à la réception du premier message.

7. Appareil pour un réseau central (110) exploitant une fonction de gestion d'emplacement pour le positionnement d'un dispositif terminal (100), comprenant des moyens pour réaliser ce qui suit :
recevoir (400) d'un élément de réseau dans un réseau d'accès radio associé au réseau central un rapport non sollicité indiquant l'activation d'au moins une unité de référence de positionnement par l'élément de réseau pour le positionnement du dispositif terminal ;
recevoir une demande d'emplacement déclenchant le positionnement ;
en réponse au rapport et à la demande d'emplacement, configurer (404) au moins un élément de réseau supplémentaire du réseau d'accès radio pour effectuer des mesures sur l'au moins une unité de référence de positionnement et le dispositif terminal pendant le positionnement, et recevoir des mesures rapportées de l'élément de réseau et de l'au moins un élément de réseau supplémentaire du réseau d'accès radio ;
estimer (406) un emplacement du dispositif terminal sur la base des données de mesure.

8. Appareil selon la revendication 7, dans lequel les moyens sont configurés pour recevoir de l'élément de réseau une configuration de signal de référence de liaison montante configuré sur l'au moins une unité de référence de positionnement et le dispositif terminal, et pour configurer l'au moins un élément de réseau supplémentaire pour mesurer au moins un signal de référence de liaison montante sur la base de la configuration de signal de référence de liaison montante dans le positionnement.

9. Appareil selon la revendication 7 ou 8, dans lequel le rapport est compris dans la demande d'emplacement.

10. Appareil selon la revendication 7 ou 8, dans lequel les moyens sont configurés pour recevoir du dispositif terminal la demande d'emplacement telle qu'elle est délivrée via l'élément de réseau à un moment différent de celui du rapport.

11. Appareil pour un dispositif terminal (100), comprenant des moyens pour réaliser ce qui suit :
transmettre à un élément de réseau d'un réseau d'accès radio un premier message demandant l'activation d'au moins une unité de référence de positionnement pour le positionnement du dispositif terminal ;
recevoir de l'élément de réseau un deuxième message provoquant une transmission de signal de référence de liaison montante pour le positionnement du dispositif terminal ; et
réaliser la transmission de signal de référence de liaison montante sur la base du deuxième message.

12. Appareil selon la revendication 11, dans lequel les moyens sont configurés pour transmettre une demande d'emplacement déclenchant le positionnement, et dans lequel le premier message est compris dans la demande d'emplacement.

13. Appareil selon la revendication 11, dans lequel les moyens sont configurés pour transmettre le premier message en tant que message de strate d'accès, et pour transmettre une demande d'emplacement déclenchant le positionnement en tant que message de strate de non accès, dans lequel la transmission de chacun du premier message et de la demande d'emplacement est déclenché à l'initiation du positionnement du dispositif terminal.

14. Appareil pour un réseau central (110) exploitant une fonction de gestion d'emplacement pour le positionnement d'un dispositif terminal (100), comprenant des moyens pour réaliser ce qui suit :
recevoir (402) une demande d'emplacement déclenchant le positionnement du dispositif terminal ;
en réponse à la demande d'emplacement, transmettre à un élément de réseau d'un réseau d'accès radio associé au réseau central une demande d'activer au moins une unité de référence de positionnement sous la commande de l'élément de réseau du réseau d'accès radio ;
en réponse à la demande, recevoir un rapport indiquant une activation de l'au moins une unité de référence de positionnement ;
configurer (404) au moins un élément de réseau supplémentaire du réseau d'accès radio pour effectuer des mesures sur l'au moins une unité de référence de positionnement et le dispositif terminal pour positionner et recevoir des mesures rapportées de l'au moins une unité de référence de positionnement et du dispositif terminal ; et
estimer (406) un emplacement du dispositif terminal sur la base des mesures rapportées.

15. Procédé comprenant les étapes suivantes :
transmettre (500), par un dispositif terminal (100) à un élément de réseau d'un réseau d'accès radio, un premier message demandant l'activation d'au moins une unité de référence de positionnement pour le positionnement du dispositif terminal ;
recevoir (504) de l'élément de réseau, par le dispositif terminal, un deuxième message provoquant une transmission de signal de référence de liaison montante pour le positionnement du dispositif terminal ; et
réaliser, par le dispositif terminal, la transmission de signal de référence de liaison montante sur la base du deuxième message.
